Europäisches Patentamt

European Patent Office

Office européen des brevets

(19)

(11) Publication number: **0 197 008
B1**

(12) **EUROPEAN PATENT SPECIFICATION**

(45) Date of publication of the patent specification:
01.08.90

(51) Int. Cl.⁵: **G05G 5/06, F16H 59/02**

(21) Application number: **86830044.3**

(22) Date of filing: **20.02.86**

(54) Gearbox for motor vehicles.

(30) Priority: **01.03.85 IT 6721585**

(43) Date of publication of application:
**08.10.86 Bulletin 86/41**

(45) Publication of the grant of the patent:
**01.08.90 Bulletin 90/31**

(84) Designated Contracting States:
**DE FR GB SE**

(56) References cited:
**EP-A- 0 025 734
EP-A- 0 066 178
EP-A- 0 170 630
DE-A- 718 615
FR-A- 2 236 228
FR-A- 2 447 576**

(73) Proprietor: **FIAT AUTO S.p.A., Corso Giovanni Agnelli 200, I-10135 Torino(IT)**

(72) Inventor: **Falzoni, Gianluigi, Via Malta 36/10, I-10141 Torino(IT)**
Inventor: **Maran, Luciano, Via Giacomo Balla 1, I-10137 Torino(IT)**

(74) Representative: **Notaro, Giancarlo et al, c/o Jacobacci-Casetta & Perani S.p.A. Via Alfieri, 17, I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to gearboxes for motor vehicles, of the conventional type indicated in the pre-characterized portion of the appended Claim 1.

The object of the present invention is to provide a gearbox of the type specified above with simple and practical means for preventing the accidental disengagement of reverse when the motor vehicle is moving.

In order to achieve this object, the invention has as its subject a gearbox for motor vehicles which further comprise the features indicated in the characterizing portion of the appended Claim 1.

Gearboxes provided with means for preventing a gear from being accidentally disengaged when the motor-vehicle is running are well-known in the art. However, none of the previously proposed solutions make use of the particular structure and arrangement of the present invention as defined in the attached Claim 1. The invention is particularly suitable for being applied to a gear box of the type disclosed in EP-A 0 170 630, filed by the same Applicant. This document falls under Art. 54(3) EPC, since it claims an earlier priority date than that of the present application and was published after the the priority date of the present application. However, it is to be understood that the invention is equally applicable also to a gearbox of a type different from that disclosed in EP-A 0 170 630.

In a preferred embodiment, the invention is further characterized by the features indicated in the appended Claims 2–7.

Further characteristics and advantages of the invention will become apparent from the description which follows with reference to the appended drawings provided purely by way of non-limiting example, in which:

Figure 1 is a partially-sectioned perspective view of a part of a gearbox for motor vehicles according to the present invention,

Figure 2 and 3 illustrate in section the part of Figure 1 in two different operating conditions,

Figure 4 is a view along the arrow IV of Figure 1, and

Figure 5 and 6 are sectional views taken along the lines V–V and VI–VI of Figures 2 and 3.

With reference to the drawings, the housing of the gearbox, indicated 1, constitutes the support structure for the internal parts of the gearbox.

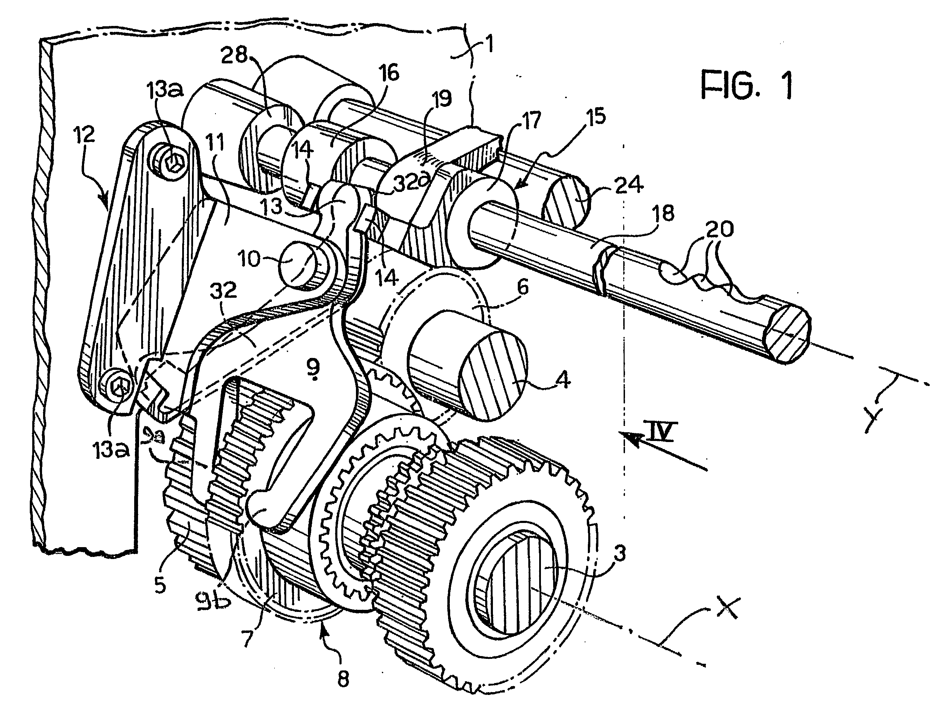

Figure 1 also illustrates two shafts 3, 4 of the gearbox which are connected together for rotation in order to engage the reverse gear. To this end, the shaft 3 carries – in a conventional manner – a freely rotatable gear 5 which meshes with a gear 6 fixed to the shaft 4 and which can be connected for rotation with the shaft 3 by the axial displacement of a collar 7 forming part of an engagement synchronizing device 8 of known type. The axial position of the collar 7 is controlled by a shifting fork 9 which, by means of a pin 10, is articulated on a wall 11 of a bracket 12 secured to the support structure 1 by screws 13a.

The fork 9 has a terminal nose 13 situated between two opposing walls 14 forming part of a single control member 15 which includes two hubs 16, 17 arranged in positions axially spaced from each other and slidably mounted on a control shifting rod 18. The shifting rod 18 is mounted for axial sliding relative to the support structure 1. The axial reciprocating movements of the shifting rod 18 are controlled, in a manner known per se, by a sleeve 19 fixed to the shifting rod 18 and provided with an appendage of known type (not illustrated), which is intended to be controlled by a manually operated gear-shift-lever. The shifting rod 18 can adopt a first operative end position in which it effects the engagement of the reverse gear, a central, neutral position in which the reverse gear is disengaged, and a second operative end position in which it effects the engagement of a higher speed ratio (e.g. the fifth gear) of the gearbox. The constructional details of the means for engaging this higher speed ratio are not illustrated in the drawings, since they are of a type known per se and do not fall within the scope of the present invention. Moreover, the omission of these details from the drawings provides for a more immediate comprehension of the latter. In any case, a gearbox having a structure of the type discussed above has been described and illustrated in the above mentioned EP-A 0 170 630 and in the corresponding Italian Utility Model Application No. 53633-B/84 filed by the same Applicant on 11.7.1984.

The snap-locking of the shifting rod 18 in each of its three operative positions is effected by the engagement of a ball locking member 20a, biassed by a spring (not illustrated), in a corresponding seat 20 formed in the control rod 18.

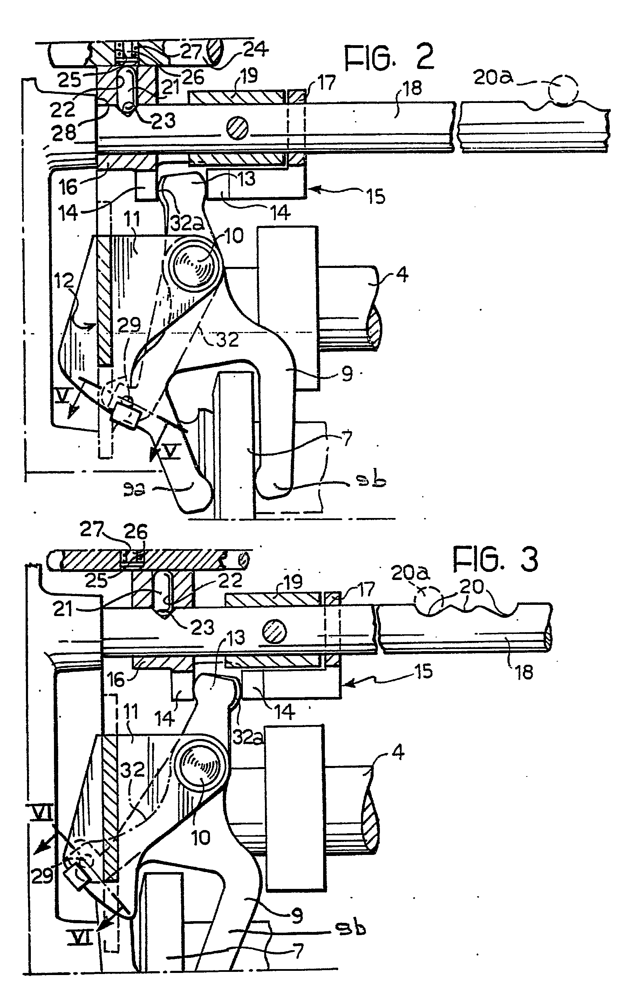

Figures 1 and 2 illustrate the rod 18 in its central neutral position in which both the reverse gear and the higher (fifth) speed ratio are disengaged. With reference to Figure 3, the position of the shifting rod 18 corresponding to the engagement of the reverse gear is displaced towards the right with respect to the position illustrated in Figure 2, while position corresponding to the engagement of the higher (fifth) speed ratio is displaced towards the left.

In accordance to what is described and illustrated in EP-A 0 170 630, when the shifting rod 18 is not in the position corresponding to the engagement of the higher (fifth) speed ratio, the hub 16 is connected to the shifting rod 18 through the engagement of a locking pin 21 in a radial hole 22 in the hub 16 and in a retaining notch 23 formed in the rod 18. The pin 21 has a greater length than the axial length of the hole 22 and is kept in partial engagement with the notch 23 because of the engagement of the end of the pin 21, opposite the notch 23, against the outer surface of a further shifting rod 24 forming part of the gearbox. Still in accordance to what is illustrated in the aforesaid EP-A 0 170 630, the further shifting rod 24 has a transverse hole 25 in which is inserted a thrust member 26 loaded by a spring 27. When the shifting rod 18 is in its central, neutral position illustrated in Figure 2, the notch 23 and the locking pin 21 are located in correspondence with the thrust member 26. If the shifting rod 18 is thrust towards the left (with reference to Figure 2) so as to effect the engagement of the higher (fifth) speed ratio, the hub 16 (and as a result the whole member 15) cannot follow the movement of the shifting rod 18 because it abuts against an abutment surface 28 defined by the wall of the support structure 1. The axial movement of the shifting rod 18 towards the left, with respect to the hub 16 (refer to Figure 2), causes the locking pin 21 to leave the retaining notch 23 and become engaged in the hole 25 against the action of the thrust member 26. Consequently, the member 15, controlling the engagement of the reverse gear, remains locked in a fixed position, in which the reverse gear is disengaged, when the shifting rod 18 is effecting the engagement of the higher (fifth) speed ratio. As long as the shifting rod 18 is so displaced, the shifting rod 24 is held in position by conventional means, not illustrated; of the type described, for example, in the aforesaid EP-A 0 170 630.

According to the present invention, provision is made for a retaining device positively to lock the shifting fork 9 in the position in which said shifting fork 9 will be, when the engagement of the reverse gear has been effected.

This retaining device includes a locking member 29 slidably mounted in a through hole 30 which passes through the wall of the shifting fork 9. The locking member 29 has a dimension, in a direction parallel to the axis of the hole 30, greater than the length of this hole.

When the shifting fork 9 is in the position corresponding to the engagement of the reverse gear, the locking member 29 is partially inserted in a flared seat 31 formed in the wall 11 of the bracket 12, whereby the shifting fork 9 is held in a fixed position.

The engagement of the locking member 29 in the seat 31, upon the engagement of the reverse gear, is achieved by means of an operating member 32 comprising a lever which is articulated on the wall 11 of the bracket 12 about the same axis 10 of articulation, whereabout the shifting fork 9 is also articulated and has a terminal nose 32a which is juxtaposed to the terminal nose 13 of the shifting fork 9 and which is arranged, together with the latter, between the two walls 14 forming part of the control member 15.

The width of the terminal nose 32a of the operating lever 32, in a direction substantially perpendicular to the walls 14, corresponds substantially to the distance between these walls, while the terminal nose 13 of the shifting fork 9 has a slightly smaller width, in the same direction. Consequently, reciprocating movements of the control member 15 in an axial direction, effected by the reciprocating movements, of the shifting rod 18 between its central, neutral position and the operative end position corresponding to the engagement of the reverse gear, cause the shifting fork 9 and the operating member 32 to have slightly different angular strokes. This occurrence can be fully appreciated by an examination of Figures 2 and 3 which illustrate how, in the condition corresponding to the disengagement of the reverse gear, the nose 32a protrudes slightly to the left of the nose 13 (see Figure 2), while, in the condition corresponding to the engagement of the reverse gear, the nose 32a protrudes slightly to the right of the nose 13 (see Figure 3).

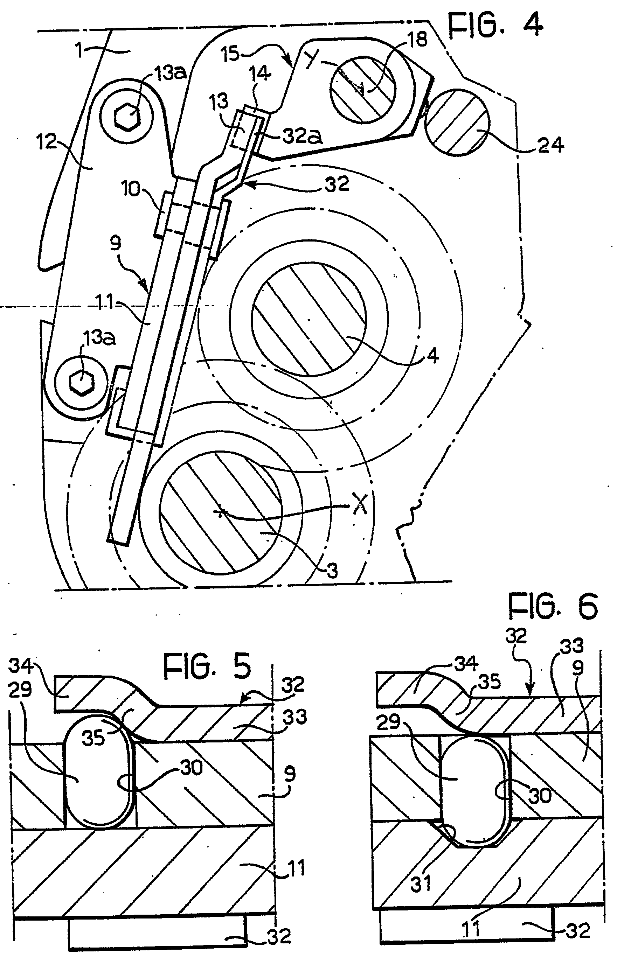

With reference to Figures 5 and 6, the second extremity of the operating lever 32 has, adjacent the through hole 30, a first wall portion 33 in sliding contact with the shifting fork 9 and a second wall portion 34 spaced from the shifting fork 9, these wall portions 33, 34 being joined by an inclined wall portion 35.

When the shifting fork 9 is in the position corresponding to the disengagement of the reverse gear (see Figure 5), the wall portion 34 of the operating lever 32 faces the through hole 30 and the locking member 29 is disengaged from the seat 31, so that the shifting fork 9 is freely movable, with respect to the bracket 12, secured to the support structure 1 of the gearbox. If the shifting rod 18 is brought, from the position illustrated in Figure 2 to the position illustrated in Figure 3 so as to effect the engagement of the reverse gear, the different amplitude of the angular stroke of the operating lever 32, with respect to that of the shifting fork 9, causes an engagement, firstly of the inclined wall portion 35 and secondly of the wall portion 33, with the locking member 29. In this way, the latter is forced through the through hole 30, by the action exerted by the operating lever 32, until it partially engages the seat 31 (see Figure 6), so as to lock the shifting fork 9 on to the bracket 12, secured to the support structure 1. In the condition corresponding to the engagement of the reverse gear, as illustrated on Figure 6, the wall portion 33 faces the end of the through hole 30 opposite the seat 31, so that it prevents, by its action upon the locking member 29, the accidental displacement of the shifting fork 9 from the position corresponding to the engagement of the reverse gear.

When the shifting rod 18 is moved back from the position illustrated in Figure 3 towards the position illustrated in Figure 2, the operating lever 32 is brought back, from the position illustrated in Figure 6 to the position illustrated in Figure 5, whereby it does no more act upon the locking member 29, so that further back movement of the shifting fork 9 causes the locking member 29 to leave the seat 31 as a result of the disengaging action exerted by the flared side wall of the seat 31 on the locking member 29.

Obviously, the principle of the invention remaining unchanged and without thereby departing from the scope of the present invention, the details of construction and the forms of embodiment may be widely varied from those hereby described and illustrated, purely by way of an example.

**Claims**

1. A motor-vehicle gear-box of the kind comprising:
a housing (1),
a shaft (3) rotatably mounted within said housing (1),
a reverse gear engagement device (8) slidably mounted on said shaft (3) between a reverse gear engagement position and a reverse gear disengagement position,
a rocker lever (9) for operating the reverse gear engagement device (8), said rocker lever (9) being articulated to a support structure (12) within said housing (1) and having a fork-shaped end portion (9a, 9b) which is operatively connected to the reverse gear engagement device (8),
a shifting rod (18) slidably mounted within said housing (1) and operatively connected to an end (13) of said rocker lever (9) which is opposite to said fork-shaped end portion (9a, 9b), said shifting rod (18) being provided to drive the rocker lever (9) between two positions corresponding to the reverse gear engagement position and the reverse gear disengagement position of said reverse gear engagement device (8), characterized in that said gear-box further comprises a device (29, 30, 31) intended to positively retain said rocker lever (9) when the latter is put into said position corresponding to the engagement of the reverse gear; said retaining device (29, 30, 31) comprising:
a locking member (29) slidably mounted in a through hole (30) in said rocker lever (9) and having an axis substantially parallel to the axis of articulation of said rocker lever (9), and
an operating member (32) intended for acting upon said locking member (29), operatively connected to said shifting rod (18) so as to be operated by the latter substantially in synchronism with said rocker lever (9) and having, when said rocker lever (9) is put into said position corresponding to engagement of the reverse gear, such an action upon said locking member (29) as to provoke the latter to slide within said through hole (30) and protrude therefrom so as to engage a seat (31) provided in a wall (11) of said support structure (12), thereby providing for said rocker lever (9) to be positively retained in said position of engagement of the reverse gear.

2. A gear-box according to Claim 1, characterized in that:
said operating member (32) is configured as a further rocking arm which is rockably mounted onto said support structure (12) about the same articulation axis of said rocker lever (9), in juxtaposition to said rocker lever (9),
said end (13) of the rocker lever (9) which is opposite to the fork-shaped end portion (9a, 9b) is adjacent to a first end (32a) of said operating member (32), both ends being received between two opposing walls (14) which are substantially perpendicular to the axis of said shifting rod (18) and are connected to the latter so as to be reciprocably movable therewith, said opposing walls being arranged at a distance from each other along a direction parallel to said axis, and
said adjacent ends (13, 32a) of said rocker lever (9) and of said operating member (32) have respective dimensions, in said direction parallel to said axis, which are different from each other so that said reciprocating movement of said shifting rod (18) between said at least two positions thereof, causes the fork-shaped end portion (9a, 9b) of said rocker arm (9) and a second end (33, 34, 35) of said operating member (32) to be rocked about said articulation axis, over a first, respectively a second, angular stroke; said first and second angular strokes having respective amplitudes which are different from each other.

3. A gear-box according to Claim 2, wherein in said direction parallel to said shifting rod axis,
said first end (32a) of said operating member (32) has a dimension which corresponds substantially to said distance existing between said two opposing walls (14), while
said end (13) of said rocker lever (9) has a dimension which is somewhat lesser than the said distance between the said walls (14), so that said first angular stroke of said fork-shaped end portion (9a, 9b) has a somewhat lesser amplitude than the amplitude of said second angular stroke of said operating member second end (33, 34, 35).

4. A gear-box according to Claim 2 or 3, wherein said first angular stroke of said rocker lever (9) is such to shift said fork-shaped end portion (9a, 9b) from said position of disengagement of the reverse gear, wherein said through hole (30) does not face said seat (31), to said position of engagement of the reverse gear, wherein said through hole (30) does face said seat (31) so that said locking member (29) may engage said seat (31), when acted upon by said operating member (32), thereby retaining said rocker lever (9) into the reverse engagement position.

5. A gear-box according to Claim 2 or 3, wherein said second end (33, 34, 35) of said operating member (32) comprises:
a first wall portion (33) so arranged as to be in sliding contact with said fork-shaped end portion (9a, 9b) of the said rocker lever (9) thereby defining a surface of mutual sliding contact between said first wall portion (33) and said fork-shaped end portion; said surface of mutual sliding contact being substantially perpendicular to the articulation axis of said rocker lever (9),
a second wall portion (34) arranged parallel to said surface of mutual sliding contact, but spaced therefrom in the direction of the articulation axis of the rocker lever (9), so as to provide a free space between said second wall portion (34) and said fork-shaped end portion (9a, 9b), and
a third wall portion (35) connecting said first and second wall portion (33, 34) to each other and inclined with respect to said surface of mutual sliding contact.

6. A gear-box according to Claims 4 and 5, wherein, when said operating member (32) and said rocker lever (9) are both in the reverse disengagement position, said through hole (30) of said rocker lever (9) faces said second wall portion (34), whereby said locking member (29) may protrude into said free space provided between said second wall portion (34) and said fork-shaped end portion (9a, 9b) so that said rocker lever (9) is freely movable relative to said support structure (12).

7. A gear-box according to Claims 4 and 5, wherein said second angular stroke of said operating member (32) is such that, when said rocker lever (9) has already been rocked to assume said reverse engagement position, whereby said through hole (30) faces said seat (31), said operating member (32) is further rocked, relative to said rocker lever (9), so that said second wall portion (34) will be no more facing said through hole (30) and the latter will be:

firstly faced to said third wall portion (35), which provokes said locking member (29) to slide within said through hole (30) and protrude therefrom to engage said seat (31), and

secondly faced to said first wall portion (33), which will act upon said locking member (29) so as to maintain the latter engaged into said seat (31), thereby providing for said rocker lever (9) to be positively maintained into said reverse engagement position and preventing said reverse gear from being accidentally disengaged.

**Patentansprüche**

1. Getriebe für Motorfahrzeuge, umfassend:
- ein Gehäuse (1),
- eine innerhalb des Gehäuses (1) drehbar angeordnete Welle (3),
- eine Einrichtung (8) für den Eingriff des Rückwärtsganges, die auf der Welle (3) zwischen einer Ineingriffstellung und einer Außereingriffstellung des Rückwärtsganges verschiebbar angeordnet ist,
- einen Schwenkhebel (9) zum Betätigen der Einrichtung (8) für den Eingriff des Rückwärtsganges, wobei der Schwenkhebel (9) an einer Trägereinheit (12) innerhalb des Gehäuses (1) schwenkbar gelagert ist und einen gabelförmigen Endabschnitt (9a, 9b) aufweist, der in Wirkverbindung mit der Einrichtung (8) für den Eingriff des Rückwärtsganges steht,
- eine innerhalb des Gehäuses (1) verschiebbar angeordnete Stellstange (18), die in Wirkverbindung mit einem gegenüber dem gabelförmigen Endabschnitt (9a, 9b) angeordneten Ende (13) des Schwenkhebels (9) steht, wobei die Stellstange (18) dazu vorgesehen ist, den Schwenkhebel (9) zwischen zwei Stellungen, die der Ineingriffstellung und der Außereingriffstellung der Einrichtung (8) für den Eingriff des Rückwärtsganges entsprechen, zu schwenken, dadurch gekennzeichnet, daß das Getriebe weiterhin eine Einrichtung (29, 30, 31) umfaßt, die dazu vorgesehen ist, den Schwenkhebel (9) sicher zu halten, wenn dieser in die der Ineingriffstellung des Rückwärtsganges entsprechende Stellung bewegt worden ist, wobei die Halteeinrichtung (29, 30, 31) folgende Bestandteile umfaßt:
- ein Verriegelungselement (29), das in einer durchgehenden Durchbrechung (30) in dem Schwenkhebel (9) verschiebbar angeordnet ist und das eine im wesentlichen parallel zu der Schwenkachse des Schwenkhebels (9) verlaufende Achse aufweist, und
- ein Betätigungselement (32), welches zur Betätigung des Verriegelungselements (29) vorgesehen ist, welches in Wirkverbindung mit der Stellstange (18) steht, so daß es durch die Stellstange (18) im wesentlichen synchron mit dem Schwenkhebel (9) betätigt wird, und welches bei einer Bewegung des Schwenkhebels (9) in die der Ineingriffstellung des Rückwärtsganges entsprechende Stellung eine solche Bewegung zur Betätigung des Verriegelungselements (29) durchführt, daß das Verriegelungselement (29) veranlaßt wird, innerhalb der durchgehenden Durchbrechung (30) zu gleiten und daraus hervorzutreten, so daß es in Eingriff mit einem in einer Wand (11) der Trägereinheit (12) vorgesehenen Sitz ·(31) gelangt und dabei den Schwenkhebel (9) sicher in der Ineingriffstellung des Rückwärtsganges hält.

2. Getriebe nach Anspruch 1, dadurch gekennzeichnet, daß das Betätigungselement (32) als ein weiterer Schwenkarm ausgeführt ist, welcher drehbar auf der Trägereinheit (12) um die Schwenkachse des Schwenkhebels (9) in Nebenstellung zu diesem Schwenkhebel (9) angeordnet ist, daß das gegenüber dem gabelförmigen Endabschnitt (9a, 9b) angeordnete Ende (13) des Schwenkhebels (9) zu einem ersten Ende (32a) des Betätigungselements (32) benachbart ist, wobei beide Enden zwischen zwei sich gegenüberstehenden Wänden (14) aufgenommen sind, welche im wesentlichen senkrecht zu der Achse der Stellstange (18) verlaufen und mit dieser Stellstange (18) in der Weise verbunden sind, daß sie wechselweise zusammen mit der Stellstange (18) bewegbar sind, wobei die sich gegenüberstehenden Wände mit Abstand in Richtung parallel zu der Achse der Stellstange (18) zueinander angeordnet sind, und daß die benachbarten Enden (13, 32a) des Schwenkhebels (9) und des Betätigungselements (32) in Richtung parallel zu der Achse jeweils voneinander verschiedene Abmessungen aufweisen, so daß die wechselseitige Bewegung der Stellstange (18) zwischen den wenigstens zwei Stellungen den gabelförmigen Endabschnitt (9a, 9b) des Schwenkhebels (9) und ein zweites Ende (33, 34, 35) des Betätigungselements (32) veranlassen, um die Schwenkachse über einen ersten bzw. einen zweiten Winkelbereich zu schwenken, wobei der erste und zweite Winkelbereich Amplituden aufweisen, welche voneinander verschieden sind.

3. Getriebe nach Anspruch 2, dadurch gekennzeichnet, daß in Richtung parallel zu der Achse der Stellstange das erste Ende (32a) des Betätigungselements (32) ein Maß aufweist, welches im wesentlichen dem zwischen den beiden sich gegenüberstehenden Wänden (14) bestehenden Abstand entspricht, während das Ende (13) des Schwenkhebels (9) ein Maß besitzt, welches etwas kleiner als der Abstand zwischen diesen Wänden (14) ist, so daß der erste Winkelbereich des gabelförmigen Endabschnitts (9a, 9b) eine etwas kleinere Amplitude aufweist wie die Amplitude des zweiten Winkelbereichs des zweiten Endes (33, 34, 35) des Betätigungselements.

4. Getriebe nach Anspruch 2 oder 3, dadurch gekennzeichnet, daß der erste Winkelbereich des Schwenkhebels (9) eine solche Größe aufweist, daß der gabelförmige Endabschnitt (9a, 9b) von der Außereingriffstellung des Rückwärtsganges, in der die durchgehende Durchbrechung (30) nicht zu dem Sitz (31) weist, in die Ineingriffstellung des Rückwärtsganges, in der die durchgehende Durchbrechung (30) zu dem Sitz (31) weist, gelangt, so daß das Verriegelungselement (29) bei Betätigung durch das Betätigungselement (32) in Eingriff mit dem Sitz (31) treten kann und dabei den Schwenkhebel (9) in der Ineingriffstellung des Rückwärtsganges hält.

5. Getriebe nach Anspruch 2 oder 3, dadurch gekennzeichnet, daß ein zweites Ende (33, 34, 35) des Betätigungselements (32) die folgenden Bestandteile umfaßt:

– einen ersten Wandabschnitt (33), der so angeordnet ist, daß er in Gleitkontakt mit dem gabelförmigen Endabschnitt (9a, 9b) des Schwenkhebels (9) ist und dabei eine Fläche für einen wechselseitigen Gleitkontakt zwischen dem ersten Wandabschnitt (33) und dem gabelförmigen Endabschnitt bildet, wobei die Fläche des wechselseitigen Gleitkontaktes im wesentlichen senkrecht zu der Schwenkachse des Schwenkhebels (9) verläuft,

– einen zweiten Wandabschnitt (34), der parallel zu der Fläche des wechselseitigen Gleitkontaktes, jedoch mit Abstand in Richtung der Schwenkachse des Schwenkhebels (9) zu der Fläche des wechselseitigen Gleitkontaktes angeordnet ist, um einen freien Raum zwischen dem zweiten Wandabschnitt (34) und den gabelförmigen Endabschnitten (9a, 9b) zu bilden, und

– einen dritten Wandabschnitt (35), der den ersten und den zweiten Wandabschnitt (33, 34) miteinander verbindet und mit bezug zu der Fläche des wechselseitigen Gleitkontaktes schräg verläuft.

6. Getriebe nach Anspruch 4 und 5, dadurch gekennzeichnet, daß im Falle, daß sich das Betätigungselement (32) und der Schwenkhebel (9) in der Außereingriffstellung des Rückwärtsganges befinden, die durchgehende Durchbrechung (30) des Schwenkhebels (9) zu dem zweiten Wandabschnitt (34) weist, wobei das Verriegelungselement (29) in den freien Raum hineinragen kann, der zwischen dem zweiten Wandabschnitt (34) und dem gabelförmigen Endabschnitt (9a, 9b) vorgesehen ist, so daß der Schwenkhebel (9) frei drehbar in bezug zu der Trägereinheit (12) ist.

7. Getriebe nach Anspruch 4 und 5, dadurch gekennzeichnet, daß der zweite Winkelbereich des Betätigungselements (32) von der Form ist, daß im Falle, daß der Schwenkhebel (9) bereits verschwenkt worden ist, um die Ineingriffstellung des Rückwärtsganges zu erreichen, wobei die durchgehende Durchbrechung (30) zu dem Sitz (31) weist, das Betätigungselement (32) weiter in bezug zu dem Schwenkhebel (9) verschwenkt wird, so daß der zweite Wandabschnitt (34) nicht mehr zu der durchgehenden Durchbrechung (30) weist und daß die durchgehende Durchbrechung (30):

zunächst zu dem dritten Wandabschnitt (35) weist, welcher das Verriegelungselement (29) veranlaßt, innerhalb der durchgehenden Durchbrechung (30) zu gleiten und daraus hervorzutreten, um in Eingriff mit dem Sitz (31) zu gelangen, und

anschließend zu dem ersten Wandabschnitt (33) weist, welcher auf das Verriegelungselement (29) einwirkt, um das in Eingriff mit dem Sitz (31) befindliche Verriegelungselement (29) und dabei den Schwenkhebel (9) sicher in der Ineingriffstellung des Rückwärtsganges zu halten, um ein plötzliches Außereingriffgelangen des Rückwärtsganges zu verhindern.

**Revendications**

1. Boîte de vitesses pour véhicule à moteur, du type qui comprend :
un boîtier (1),
un arbre (3) monté afin qu'il puisse tourner dans le boîtier (1),
un dispositif (8) de mise en prise d'un pignon de marche arrière, monté afin qu'il puisse coulisser sur l'arbre (3) entre une position de mise en prise et une position de séparation du pignon de marche arrière, un levier basculant (9) destiné à commander le dispositif (8) de mise en prise du pignon de marche arrière,
le levier basculant (9) étant articulé sur une structure de support (12) placée dans le boîtier (1) et ayant une partie d'extrémité (9a, 9b) en forme de fourchette qui est opérationellement raccordée au dispositif (8) de mise en prise du pignon de marche arrière, et une tige (18) de déplacement montée afin qu'elle puisse coulisser à l'intérieur du boîtier (1) et opérationellement raccordée a une extrémité (13) du levier basculant (9) qui est opposée à la partie d'extrémité en forme de fourchette (9a, 9b), la tige de déplacement (18) étant destinée à déplacer le levier basculant (9) entre deux positions qui correspondent à la position de mise en prise et à la position de séparation du pignon de marche arrière du dispositif (8) de mise en prise du pignon de marche arrière,
caractérisée en ce que la boîte de vitesses comporte en outre un dispositif (29, 30, 31) destiné à retenir positivement le levier basculant (9) lorsque ce dernier est mis dans la position correspondant à la mise en prise du pignon de marche arrière, le dispositif de retenue (29, 30, 31) comprenant :
un organe de blocage (29) monté afin qu'il puisse coulisser dans un trou débouchant (30) formé dans le levier basculant (9) et ayant un axe sensiblement parallèle à l'axe d'articulation du levier basculant (9), et
un organe de manœuvre (32) destiné à agir sur l'organe de blocage (29), raccordé à la tige (18) de déplacement afin qu'il soit manœuvré par cette dernière pratiquement en synchronisme avec le levier basculant (9), et ayant, lorsque le levier basculant (9) est mis dans la position qui correspond à la mise en prise du pignon de marche arrière, un effet sur l'organe de blocage (29) tel qu'il provoque un coulissement de cet organe de blocage dans le trou débouchant (30) et sa sortie de ce trou afin qu'il vienne coopérer avec un siège (31) formé dans une paroi (11) de la structure de support (12), le levier basculant (9) étant ainsi retenu positivement dans la position de mise en prise du pignon de marche arrière.

2. Boîte de vitesses selon la revendication 1, caractérisée en ce que :
l'organe de manœuvre (32) a la configuration d'un bras basculant supplémentaire qui est monté afin qu'il puisse basculer sur la structure de support (12) autour du même axe d'articulation que le levier basculant (9), et qui est juxtaposé à ce levier basculant (9),

l'extrémité (13) du levier basculant (9) qui est opposée à la partie d'extrémité en forme de fourchette (9a, 9b) est adjacente à une première extrémité (32a) de l'organe de manœuvre (32), ces deux extrémités étant logées entre les deux parois opposées (14) qui sont sensiblement perpendiculaires à l'axe de la tige de déplacement (18) et qui sont raccordées à cette dernière afin qu'elles soient mobiles en translation avec cette tige, les parois opposées étant placées à une certaine distance l'une de l'autre en direction parallèle audit axe, et

les extrémités adjacentes (13, 32a) du levier basculant (9) et de l'organe de manœuvre (32) ont des dimension respectives, en direction parallèle à l'axe, qui sont différentes afin que le mouvement de déplacement en translation de la tige de déplacement (18) entre lesdites deux positions au moins provoque le basculement de la partie d'extrémité en forme de fourchette (9a, 9b) du bras basculant (9) et d'une seconde extrémité (33, 34, 35) de l'organe de manœuvre (32) autour de l'axe d'articulation, dans une première et une seconde course angulaire respectivement, la première et la seconde course angulaire ayant des amplitudes respectives qui sont différentes l'une de l'autre.

3. Boîte de vitesses selon la revendication 2, dans laquelle, en direction parallèle à l'axe de la tige de déplacement,

la première extrémité (32a) de l'organe de manœuvre (32) a une dimension qui correspond pratiquement à la distance comprise entre les deux parois opposées (14), alors que

ladite extrémité (13) du levier basculant (9) a une dimension qui est un peu inférieure à la distance comprise entre les parois (14), si bien que la première course angulaire de la partie d'extrémité en forme de fourchette (9a, 9b) a une amplitude un peu inférieure à l'amplitude de la seconde course angulaire de la seconde extrémité de l'organe de manœuvre (33, 34, 35).

4. Boîte de vitesses selon la revendication 2 ou 3, dans laquelle la première course angulaire du levier basculant (9) est telle que la partie d'extrémité en forme de fourchette (9a, 9b) est déplacée de ladite position de séparation du pignon de marche arrière, dans laquelle le trou débouchant (30) n'est pas en face du siège (31), vers la position de mise en prise du pignon de marche arrière, dans laquelle le trou débouchant (30) est en face du siège (31) si bien que l'organe de blocage (29) peut pénétrer dans le siège (31) lorsqu'il est commandé par l'organe de manœuvre (32), si bien que le levier basculant (9) est retenu dans la position de mise en prise de marche arrière.

5. Boîte de vitesses selon la revendication 2 ou 3, dans laquelle la seconde extrémité (33, 34, 35) de l'organe de manœuvre (32) comporte :

une première partie de paroi (33) disposée de manière qu'elle soit en contact coulissant avec la partie d'extrémité en forme de fourchette (9a, 9b) du levier basculant (9) et délimite ainsi une surface de contact mutuel coulissant entre la première partie de paroi (33) et la partie d'extrémité en forme de fourchette, la surface de contact mutuel coulissant étant sensiblement perpendiculaire à l'axe d'articulation du bras basculant (9),

une seconde partie de paroi (34) disposée parallèlement à la surface de contact mutuel coulissant, mais placée à distance de celle-ci dans la direction de l'axe d'articulation du levier basculant (9), afin qu'un espace libre soit délimité entre la seconde partie de paroi (34) et la partie d'extrémité en forme de fourchette (9a, 9b), et

une troisième partie de paroi (35) raccordant la première et la seconde partie de paroi (33, 34) l'une à l'autre et inclinée par rapport à la surface de contact mutuel coulissant.

6. Boîte de vitesses selon les revendications 4 et 5, dans laquelle, lorsque l'organe de manœuvre (32) et le levier basculant (9) sont tous deux en position de séparation du pignon de marche arrière, le trou débouchant (30) du levier basculant (9) est en face de la seconde partie de paroi (34), si bien que l'organe de blocage (29) peut dépasser dans l'espace libre délimité entre la seconde partie de paroi (34) et la partie d'extrémité en forme de fourchette (9a, 9b) si bien que le levier basculant (9) peut se déplacer librement par rapport à la structure de support (12).

7. Boîte de vitesses selon les revendications 4 et 5, dans laquelle la seconde course angulaire de l'organe de manœuvre (32) est telle que, lorsque le levier basculant (9) a déjà basculé pour prendre la position de mise en prise de marche arrière, si bien que le trou débouchant (30) est en face du siège (31), l'organe de manœuvre (32) bascule plus loin par rapport au levier basculant (9) si bien que la seconde partie de paroi (34) n'est plus en face du trou débouchant (30) et ce dernier est :

premièrement en face de la troisième partie de paroi (35) qui provoque un coulissement de l'organe de blocage (29) dans le trou débouchant (30) et sa sortie afin qu'il soit au contact du siège (31), et

deuxièmement en face de la première partie de paroi (33) qui agit sur l'organe de blocage (29) afin que ce dernier soit maintenu au contact du siège (31), si bien que le levier basculant (9) est maintenu positivement dans la position de mise en prise de la marche arrière et le pignon de marche arrière ne peut pas se séparer accidentellement.

FIG. 1

# FIG. 2

# FIG. 3

FIG. 4

FIG. 6

FIG. 5